# EUROPEAN PATENT APPLICATION

(11) **EP 0 716 331 A1**
(43) Date of publication of application: **12.06.1996**
(21) Application number: 94119534.9
(22) Date of filing: 09.12.1994
(51) Int. Cl.: G02C 5/22

(54) **Improved eyeglass frame**

(71) Applicant: MEET COLOR INDUSTRY CORPORATION, Sabae-shi, Fukui-ken (JP)
(72) Inventor: Hososkawa, Yoshinori, Nyu-gun, Fukui-ken (JP)
(74) Representative: VOSSIUS & PARTNER

(57) **Abstract**

An eyeglasses frame contains a hollow bearing (4). The bearing has one end secured to a rim (1) and the other end connected to a temple (5). The bearing has a bearing surface at its one end. The temple has a pivot in contact with the bearing surface. A coil spring is disposed within the bearing so as to urge the pivot against the bearing surface. A hole and a continuous notch are formed in the bearing. The temple has a base portion which extends through the hole and is loosely fitted in the notch. This arrangement allows folding of the temple.

## Description

The present invention relates to an eyeglasses frame and more particularly, to an improved temple joint structure.

Typically, an eyeglass frame employs hinges to foldably connect temples. The hinge has opposite hinge members swingable with respect to a hinge pin. One of the hinge member is fixed to an joint piece which is, in turn, brazed to a front frame or rim. The other hinge member is fixed to the temple. When the eyeglass frame is made of resin, the one hinge member is embedded in the rim, and the other hinge member is secured to the temple by a screw.

Through the use of the hinge, the temple is folded numerous times. The sliding surface of the hinge is thus subjected to wear and backlash. As this occurs, the temple also suffers from backlash and may be displaced or even disengaged from the ear of a user. To this end, the user must tighten the hinge screw whenever it is loosened due to wear. Another disadvantage with the hinge is that connection of the temple is cumbersome.

The hinge members are brazed to the joint piece and the temple, respectively. Then, the hinge screw is inserted between the hinge members to complete the hinge. This hinge screw is extremely small and difficult to handle. It is also cumbersome to accurately position the hinge members relative to the joint piece and the temple during a brazing process. If the hinge members are offset from or improperly connected to the temple, it is impossible to fold the temple. The use of such hinge results in an increase in the size of the joint and often deteriorates the aesthetic design of the eyeglass frame.

Accordingly, it is an object of the present invention to overcome the problems encountered in the prior art and to provide a slim temple joint which is simple in structure, easy to assemble, and free from wear or backlash.

According to the present invention, there is provided an eyeglass frame, which is foldable without the need to use a conventional hinge. An joint piece has one end brazed to a rim as is conventional. The other end of the joint piece is fixed to a bearing. A temple has a pivot at its one end. The pivot is fitted within the front end of the bearing. The bearing is cylindrical in shape and allows for folding of the temple. A spring is disposed within the bearing to urge the pivot. This arrangement enables the joint piece and the temple to extend along a straight line without any protrusions which may be present when a conventional hinge is employed. Thus, the present invention provides a slim temple joint structure.

A hole is formed in the front end of the bearing to receive the temple. Also, a notch is formed to allow folding of the temple. The temple is pivot or swung about the pivot. The pivot is in the form of a spherical ball or a cylindrical column. The pivot is in contact with a bearing surface. The temple includes a base portion which has flat upper and lower surfaces and is loosely fitted in the notch.

A preferred embodiment of the present invention will now be described, by way of example only, with reference to the accompanying drawings.
Fig. 1 is a perspective view of an eyeglass frame according to one embodiment of the present invention;
Fig. 2 shows the outer appearance of the temple joint structure;
Fig. 3 is a sectional view, on an enlarged scale, of the temple joint shown in Fig. 2; and
Figs. 4a and 4b are side and end views of one end of the temple joint.

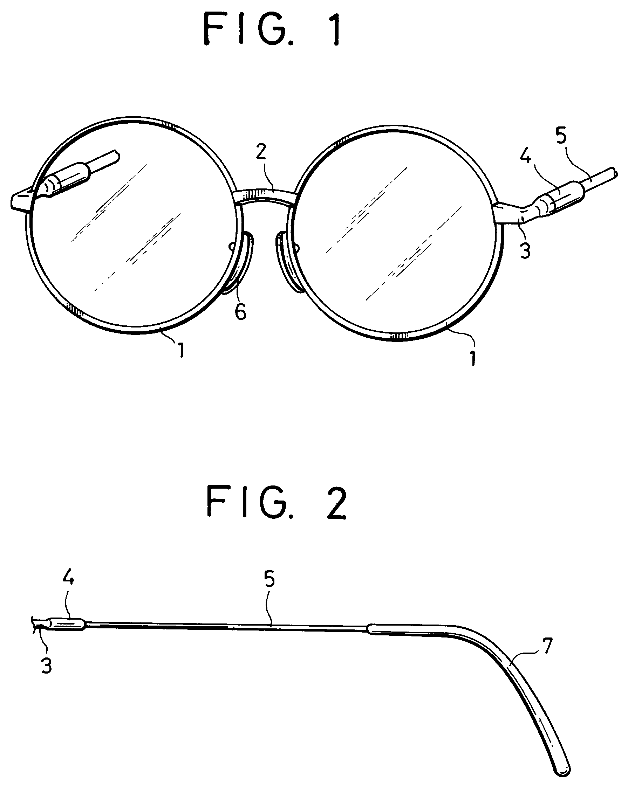

Fig. 1 shows an eyeglass frame with a temple joint according to the present invention. 1 indicates rims. 2 indicates a bridge. 3 indicates joint pieces. 4 indicates bearings. 5 indicates temples. The rims 1, 1 are laterally symmetrical and brazed to the bridge 2. Nose pads 6, 6 are attached to the respective rims 1, 1. The joint pieces 3, 3 have one ends brazed to the outer sides of the rims 1, 1 and the other ends fixed to one ends of the bearings 4, 4. The temples 5, 5 are connected to the other ends of the bearings 4, 4.

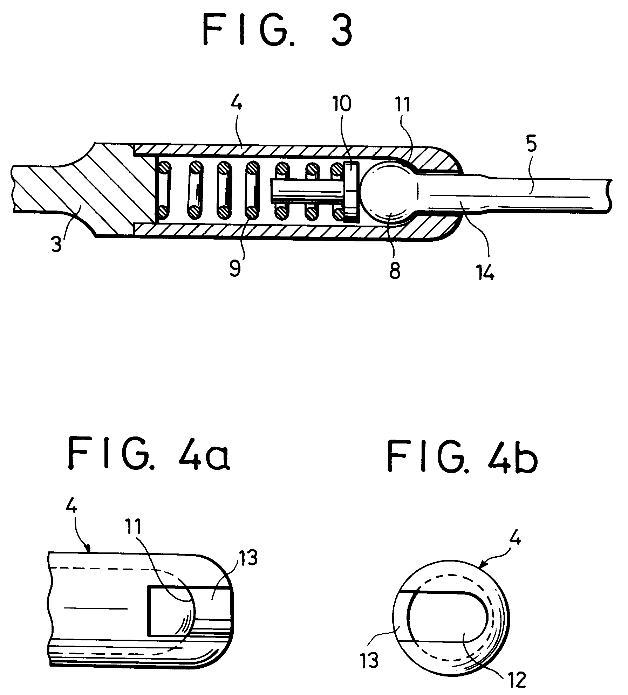

Each of the temples 5 has a pivot 8 at its one end. The pivot 8 is fitted within the bearing 4. The temple 5 is foldable with respect to the pivot 8. Referring to Fig.2, the bearing 4 is cylindrical and has a hole at its front end. The temple 5 extends through the hole. An ear-piece 7 is fitted over the free end of the temple 4. Fig. 3 is a sectional view of the bearing 4 to which the temple 5 is connected. The bearing 4 is cylindrical in shape and has a hollow interior. The pivot 8 of the temple 5 is fitted in the front end of the hollow interior of the bearing 4. Also, a coil spring 9 is disposed within the bearing 4. An abutment member 10 is provided adjacent to the pivot and is contacted with the pivot 8.

The force of the coil spring 9 is exerted on the pivot 8 through the abutment member 10 so as to urge the pivot 8 against a bearing surface 11. This arrangement secures the pivot 8 in place. The pivot 8 is in the form of a spherical ball. The bearing surface 11 is also spherical so that the pivot 8 can be rotated on the bearing surface 11. The temple 5 is rotated with the pivot 8 and can be folded to a given position. As shown in Fig. 4, a hole 12 extends through the front end of the bearing 4. A notch 13 is formed in one side of the bearing 4 and extends continuously from the hole 12. This arrangement allows for swing motion of the temple 5.

As mentioned, the temple 5 has a spherical pivot and can be swung about the pivot 5. The temple 5 has a base portion 14 with flat upper and lower surfaces. The notch 13 serves as a guide to ensure sliding motion of the temple 5. In Fig. 3, the pivot 8 is spherical, but the shape of the pivot is not limited thereto. For example, the temple may be in the form of a column. When the pivot 8 is in the form of a column, the bearing surface 11 of the bearing 4 should, of course, be shaped to correspond to the outer shape of the column-shaped pivot.

In assembling the temple joint of the present invention, the temple 5 is first inserted through one open end of the bearing 4 adjacent to the joint piece 3 before the bearing 4 is brazed to the joint piece 3. The abutment member and the coil spring 9 are then inserted into the bearing 4. Thereafter, the bearing 4 is brazed to the joint piece 3. As stated earlier, in the temple joint of the present invention, the temple is provided, at its one end, with the pivot which is fitted within the bearing under the action of the coil spring. The advantages of this invention
are as follows.

The temple is foldably connected without the need to use a conventional hinge. Thus, the temple has a lesser number of brazed portions than the conventional hinge joint and is easy to assemble. Also, as the pivot of the temple is fitted within the bearing under the action of the spring, the pivot is secured in place and free from backlash. This arrangement also eliminates backlash of the temple. In a conventional hinge joint, a hinge laterally projects. This deteriorates the aesthetic design of a temple which should be thin and slim. Quite oppositely, the joint of the present invention extends along a straight line. The bearing has a size only slightly larger than that of the temple. Thus, the present invention improves the aesthetic design of the overall eyeglass frame.

## Claims

1. An eyeglasses frame comprising a front and two temples (5) hinged to the opposite sides of the front so as to permit the temples to fold on the front, characterized in that it has two hinge assemblies fixed to joint pieces (3) of the opposite sides of the front, each assembly comprising: a bearing (4) having a hollow interior and fixed to said joint piece at one end, a hole (12) and a notch (13) being formed in the other end of the bearing, said notch (13) extending from the hole and communicating with said hollow interior; a pivot (8) integrally formed at one end of the temple; and a resilient element (9) disposed within said hollow interior of said bearing; wherein said bearing (4) having a bearing surface (11) at said other end, said pivot (8) being received in the hollow interior while being in contact with said bearing surface urgedly by said resilient element, said temple (5) having a base portion (14) extending from said pivot, and said base portion (14) having flat upper and lower surfaces loosely fit within said notch.
